(19) Europäisches Patentamt
European Patent Office
Office européen des brevets

(11) **EP 2 969 534 B1**

(12) # EUROPEAN PATENT SPECIFICATION

(45) Date of publication and mention
of the grant of the patent:
**18.10.2017 Bulletin 2017/42**

(21) Application number: **14709479.1**

(22) Date of filing: **21.02.2014**

(51) Int Cl.:
*B32B 27/20* (2006.01)   *B32B 5/18* (2006.01)
*B32B 27/40* (2006.01)   *B32B 15/08* (2006.01)
*E04B 1/94* (2006.01)   *B32B 5/24* (2006.01)
*B32B 15/04* (2006.01)   *B32B 15/095* (2006.01)
*B32B 27/06* (2006.01)

(86) International application number:
**PCT/US2014/017559**

(87) International publication number:
**WO 2014/158512 (02.10.2014 Gazette 2014/40)**

(54) **PANEL WITH FIRE BARRIER**

TAFEL MIT FEUERSCHUTZWAND

PANNEAU AVEC BARRIÈRE IGNIFUGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2013 EP 13425039**

(43) Date of publication of application:
**20.01.2016 Bulletin 2016/03**

(73) Proprietor: **Dow Global Technologies LLC Midland, MI 48674 (US)**

(72) Inventors:
• **GUANDALINI, Maurizio**
**I-54033 Carrara (IT)**
• **BERTUCELLI, Luigi**
**I-42100 Reggio Nell' Emilia (IT)**
• **LOTTI, Luca**
**I-42124 Reggio Emilia (IT)**

(74) Representative: **Beck Greener**
**Fulwood House**
**12 Fulwood Place**
**London WC1V 6HR (GB)**

(56) References cited:
**EP-A1- 0 095 530      EP-A1- 1 348 542
WO-A1-2006/010697   WO-A1-2010/114695
US-A1- 2012 189 838**

• **G. VAIRO, L. PELLACANI, L. BERTUCELLI, P. GOLINI, L. LOTTI: "Enhanced polyisocyanurate foams for metal faced panels", POLYURETHANES TECHNICAL CONFERENCE 2010, 13 October 2010 (2010-10-13), page 360, XP008163330, ISBN: 978-1-61782-706-8**
• **"Rigid Polyurethane Foams/Chapter 8/8.1 General foam properties" In: Michael Szycher: "Szycher's Handbook of Polyurethanes", 31 December 2012 (2012-12-31), CRC Press, XP002699888, ISBN: 1439839581 page 258, page 258**

**Description**

<u>Field</u>

Embodiments relate to panels and panel arrangements including fire barriers, to constructions including such panels, and to methods of forming the panels and panel arrangements.

<u>Introduction</u>

Rigid polymer foams provide good thermal insulation and may be used in building components such as "sandwich" pre-insulated panels. The pre-insulated panels may be self-supporting and used in, e.g., internal partition walls, external walls, facades, and roofs. US2012/189838A1 discloses a panel comprising a metal facing, an insulating foam layer, and a "polyisocyanurate adhesive layer between the first metal facing and the foam layer. One example of adhesive formulation is disclosed where a isocyanate reactant is reacted with a polyol reactant having an hydroxyl number of 55, at an index of 300.

<u>Summary</u>

Embodiments may be realized by providing a panel that includes a first metal facing, an insulating foam layer, and a fire barrier layer between the first metal facing and the foam layer. The fire barrier layer includes a dispersion of expandable graphite in a polyisocyanurate polymer matrix. The polymer matrix is formed by reaction, at an isocyanate index of more than 250, of an isocyanate-containing reactant and a polyol reactant including a long chain polyol of equivalent weight of more than 300. The amount of expandable graphite per unit area is at least 200 $g/m^2$.

<u>Brief Description of the Drawings</u>

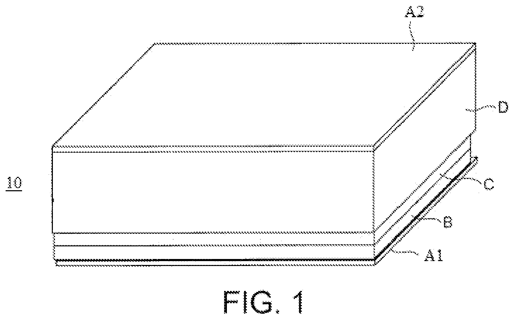

FIG. 1 illustrates a perspective view of a panel 10 according to an exemplary embodiment. The layers, which may not all be present, are illustrated in the following order: metal facing A1, fire barrier layer B, further fire barrier layer C, insulating foam D, and metal facing A2.

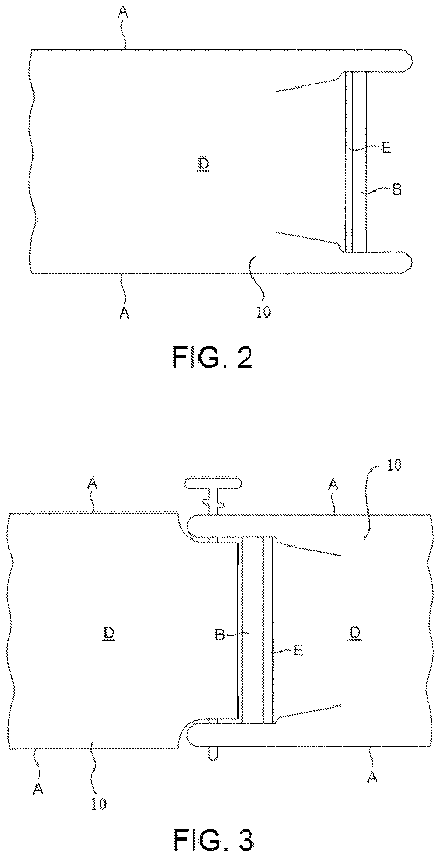

FIG. 2 illustrates a side view of a panel 10 including a joint region according to an exemplary embodiment. The components, which may not all be present, include the following: metal facing A, standard gasket and/or bonding layer E, fire barrier layer B, and insulating foam D (relative positioning of the standard gasket and/or bonding layer E and the fire barrier layer B may be varied).

FIG. 3 illustrates a side view of an exemplary arrangement of the panel 10 of FIG. 2 mounted to an adjacent panel. Self-threading screws are shown at the ends of the joint region.

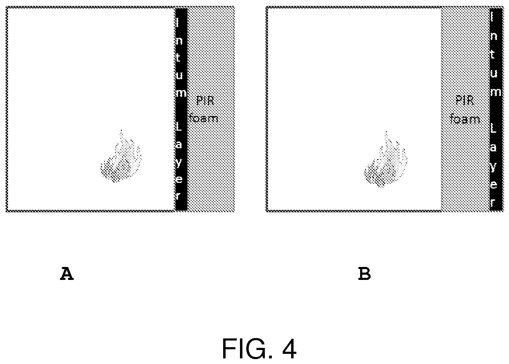

FIG. 4 illustrates the arrangement of the foam core ("PIR foam") and fire barrier layer ("Intum. Layer") relative to the fire, whereas FIG. 4 (A) illustrates when the fire barrier layer is on the side of the foam core close to the fire ("hot side"), and FIG. 4 (B) illustrates when the fire barrier layer is on the side of the foam core remote from the fire ("cold side").

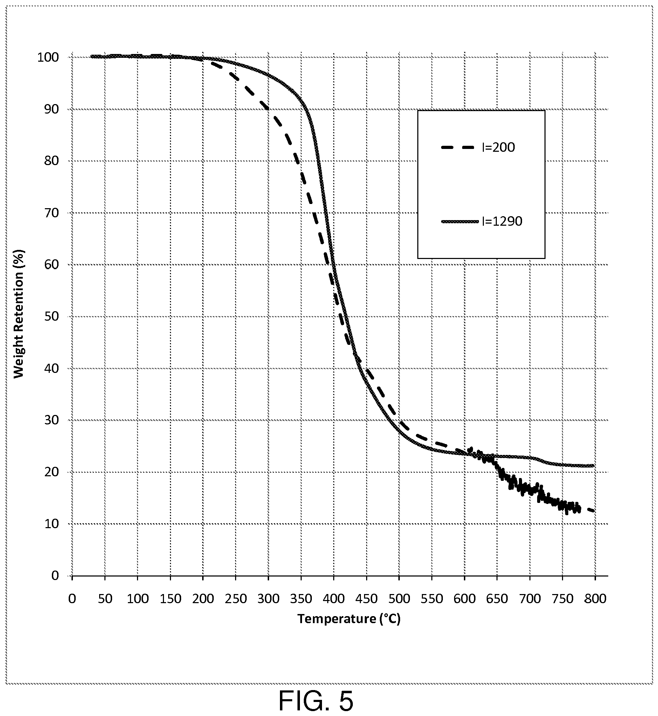

FIG. 5 illustrates the results of thermogravimetric analysis for the fire barrier layer of Working Example 1 (having an isocyanate index of 1290) and a comparative fire barrier layer (having an isocyanate index 200), whereas the x axis represents temperature (°C) and the y axis represents the remaining mass (%).

<u>Detailed Description</u>

Sandwich panels may include a rigid polyurethane/polyisocyanurate (PUR/PIR) foam core bonded to metal facing layers, e.g., of steel, aluminum, or stressed skins of metal foil. Embodiments relate to a sandwich panel that includes a metal facing, an insulating foam layer, and a fire barrier layer between the metal facing and the foam layer. The fire barrier layer includes a dispersion of expandable graphite in a polyisocyanurate polymer matrix, in which the polymer matrix is formed by reaction at an index of more than 250 of an isocyanate-containing reactant and a polyol reactant comprising a long chain polyol of equivalent weight of more than 300. According to embodiments, the amount of expandable graphite per unit area of the panel is at least 200 $g/m^2$. The panel may further include another metal facing on the opposite side of the foam layer. The panel may be self-supporting.

A further fire barrier layer may or may not be present between the other metal facing and the foam. This fire barrier layer may or may not be the same as the first fire barrier layer. The panel may include a thin layer of non-expanded or slightly expanded polyisocyanate based polymer formed from an isocyanate and a polyol, which is used to promote adhesion between the metal facing and the foam core and/between metal facing and a fire barrier layer. This thin layer may be referred to as the additional polyurethane/polyisocyanurate layer or adhesion promoter layer.

Fire Barrier Layer

The fire barrier layer is also referred to herein as the intumescent layer, the first fire barrier layer, and the fire barrier layer including expandable graphite. The fire barrier layer is positioned between the foam layer (e.g., foam core) and the metal facing. For example, the fire barrier layer is continuous and is continuously bonded (in a single area without spaces therein) to the metal facing and to the foam layer. The fire barrier layer may be considered as a modified adhesion promoter layer. The fire barrier layer may have a density of at least 200 g/L (e.g., at least 500 g/L). The fire barrier layer may have a thickness from 2 mm to 30 mm (e.g., 2 mm to 25 mm, 3 mm to 20 mm, 5 mm to 15 mm, etc.).

The fire barrier layer provides thermal barrier properties, i.e., a temperature gradient in fire conditions. This is intended to improve the insulation performance during the fire resistance test. The suitability of a material to perform as thermal barrier material may be evaluated, e.g., in a laboratory scale using the testing procedure described below and/or by measuring temperature increase with a thermocouple positioned at the interface between the thermal barrier material and the foam layer (or positioned in the foam layer at a certain distance from the interface). According to an exemplary embodiment, the fire barrier layer has a thermal conductivity (k-factor) of less than 0.2 W/(m*K), measured at room temperature.

The fire barrier layer may be rigid. For example, the fire barrier layer may have a glass transition temperature of at least 50 °C (e.g., about 100 °C). The fire barrier layer may have a Young's modulus according to UNI EN ISO 604 of at least 30 MPa (e.g., approximately 80 MPa).

Expandable graphite is used to provide thermal barrier properties in the fire barrier layer. Expandable graphite (an intercalation compound of graphite also referred to as "exfoliating graphite") is a particulate expandable under fire conditions. Expandable graphite may be prepared, e.g., by immersing natural flake graphite in a bath of chromic acid, then concentrated sulfuric acid. According to an exemplary embodiment, the expandable graphite particles are of mean particle size 200 $\mu$m to 300 $\mu$m. The expandable graphite may be capable of expansion to at least 200 times (e.g., 250 to 350 times) its initial volume. Different expandable graphites may have different expansion temperatures. According to an exemplary embodiment, the expandable graphite begins its expansion at around 160 °C to 170 °C. A low expansion temperature is desirable where the fire barrier layer is on the opposite side of the foam core from the potential fire source (e.g., see FIG. 4 (B)). Exemplary types of expandable graphite include QUIMIDROGA Grade 250 and NORD-MIN® KP 251 (commercially available from Nordmann Rassmann).

Without intending to be bound to any theory, when exposed to the heat of a developing fire, the fire barrier layer undergoes a physical/chemical modification leading to the formation of a highly expanded porous carbonaceous char that when on the fire side of the foam core (e.g., see FIG. 4 (A)) helps to protect the foam core from flame impingement, and when on the cold side (e.g., see FIG. 4 (B)) helps by sealing cracks in the foam core and contributes to provide thermal barrier properties.

According to embodiments, the amount of expandable graphite present per unit area of the panel is calculated based on layer thickness, layer density, and weight percent of expandable graphite in the fire barrier layer (expressed as weight percentage divided by 100, as would be understood by a person skilled in the art) incorporated in the reactants:

$$\text{Amount of expandable graphite per unit area} = \text{(wt\% of expandable graphite to total components in fire barrier layer)} / 100 \times \text{(density of fire barrier layer)} \times \text{(thickness of fire barrier layer)}$$

It is believed that the amount of expandable graphite per unit area determines the attainable expansion of the layer and the extent of fire protection. The amount of expandable graphite per unit area is at least 200 g/m$^2$, at least 300 g/m$^2$, at least 500 g/m$^2$, at least 600 g/m$^2$, and/or at least 800 g/m$^2$. In an exemplary embodiment, the amount of expandable graphite per unit area is at least 900 g/m$^2$ (e.g., about 1000 g/m$^2$). For example, the amount of expandable graphite per unit area may be from 300 g/m$^2$ to 1500 g/m$^2$ (e.g., 500 g/m$^2$ to 1250 g/m$^2$, 600 g/m$^2$ to 1200 g/m$^2$, 900 g/m$^2$ to 1100 g/m$^2$, etc.).

The expandable graphite is dispersed in a polyisocyanurate (PI) polymer matrix. The term "PI" is used herein for polyisocyanate-based polymers formed at high isocyanate index. The polymer matrix will include both isocyanurate and urethane groups. Polyisocyanate-based polymer typically has good adhesive properties to the foam core, further fire barrier layers and/or the metal facings. The PI polymer matrix is formed from a polyol component including at least one polyol reactant and an isocyanate component including at least one isocyanate-containing reactant.

The polyol component includes at least one long chain polyol having an equivalent weight of more than 300, more than 1000, and/or more than 1200. Equivalent weight (EW) is defined as the weight of the compound per reactive site. The equivalent weight may be calculated as EW = 56.1 X 1000/OH where OH = hydroxyl number. One or more non-long chain polyols may also be included in the polyol component. For example, the at least one polyol reactant may consist of one or more long chain polyols, i.e., no other polyols are present. Long chain polyols control crosslinking density and reduce brittleness. Such polyols are also believed to promote bonding to facings (e.g., steel facings).

The long chain polyol of the polyol component may be a polyether polyol and/or a polyester polyol. The functionality of the long chain polyol may be from 2 to 3. Exemplary initiators include glycol, glycerine, and trimethylolpropane. Exemplary polyols include VORANOL™ polyols (polyether polyols available from The Dow Chemical Company), of which examples include VORANOL™ CP 4702 (a polyether polyol formed by adding propylene oxide and ethylene oxide to a glycerine starter, a nominal functionality of 3, and an EW of approximately 1580) and VORANOL™ P1010 (a polyether polyol formed by adding propylene oxide to a propylene glycol starter, a nominal functionality of 2, an EW of approximately 508). Other exemplary polyols include STEPANPOL™ polymers (polyester polyols available from Stepan Company), of which examples include STEPANPOL™ PS 70L. Various combinations of polyols may be used to form the polyol component.

The isocyanate component may include isocyanate-containing reactants that are aliphatic, cycloaliphatic, alicyclic, arylaliphatic, and/or aromatic polyisocyanates and derivatives thereof. Exemplary derivatives include allophanate, biuret, and NCO terminated prepolymer. According to an exemplary embodiment, the isocyanate component includes at least one aromatic isocyanates, e.g., at least one aromatic polyisocyanate. For example, the isocyanate component may include aromatic diisocyanates such as at least one isomer of toluene diisocyanate (TDI), crude TDI, at least one isomer of diphenyl methylene diisocyanate (MDI), crude MDI, and/or higher functional methylene polyphenyl polyisocyanate. As used herein MDI refers to polyisocyanates selected from diphenylmethane diisocyanate isomers, polyphenyl methylene polyisocyanates and derivatives thereof bearing at least two isocyanate groups. The crude, polymeric, or pure MDI may be reacted with polyols or polyamines to yield modified MDI. Blends of polymeric and monomeric MDI may also be used. The MDI advantageously has an average of from 2 to 3.5 (e.g., from 2.0 to 3.2) isocyanate groups per molecule. Exemplary isocyanate-containing reactants include VORANATE™ M229 PMDI isocyanate (a polymeric methylene diphenyl diisocyanate with an average of 2.7 isocyanate groups per molecule, available from The Dow Chemical Company).

An index for forming the PI polymer matrix is more than 250, more than 300, more than 500, and/or more than 700. The PI polymer matrix may be less than 2000. The term "index" refers to the isocyanate index, which is the number of equivalents of isocyanate-containing compound added per 100 theoretical equivalents of isocyanate-reactive compound. An isocyanate index of 100 corresponds to one isocyanate group per isocyanate-reactive hydrogen atom present, such as from water and the polyol composition. A higher index indicates a higher amount of isocyanate-containing reactant. A high isocyanate index is believed to lead to better thermal stability (as shown in the examples) and reaction-to-fire behavior, including reduced smoke production.

A catalyst may be used in forming the PI polymer matrix, e.g., catalyst known in the art may be used. Exemplary catalysts include trimerisation catalysts, which promote reaction of isocyanate with itself. Examples of catalysts include tris(dialkylaminoalkyl)-s-hexahydrotriazines (such as 1,3,5-tris(N,N-dimethylaminopropyl)-s-hexahydrotriazine), DABCO™ TMR 30, DABCO™ K-2097 (potassium acetate), DABCO™ K15 (potassium octoate), POLYCAT™ 41, POLYCAT™ 43, POLYCAT™ 46, DABCO™ TMR, CURITHANE™ 52, tetraalkylammonium hydroxides (such as tetramethylammonium hydroxide), alkali metal hydroxides (such as sodium hydroxide), alkali metal alkoxides (such as sodium methoxide and potassium isopropoxide), and alkali metal salts of long-chain fatty acids having 10 to 20 carbon atoms (and in some embodiments, pendant hydroxyl groups).

A chain extender, a cross-linking compound, and/or another additive may be used in forming the PI polymer matrix. Exemplary chain extenders include dipropylene glycol, tripropylene glycol, diethyleneglycol, polypropylene, and polyethylene glycol.

Further Fire Barrier Layers

One or more further fire barrier layers may be present. A further fire barrier layer may be arranging between the metal facing and the foam layer on either or both sides of a first fire barrier layer that includes expandable graphite (as discussed above) and/or may be between another metal facing and the foam layer. Where one or more further fire barrier layers are present between the metal facing and the foam layer, the layers may be formed in any order on the metal facing. If the further fire barrier layer does not have adhesive properties, it may be desirable to position it between the first fire barrier layer and the foam layer. Also, where a fire barrier layer does not have good adhesive properties, a separate adhesive may be used. For example, a thin layer of non-expanded or slightly expanded polyisocyanate based polymer formed from an isocyanate and a polyol may be used to promote adhesion.

Fire barrier layers (including the fire barrier layer having expandable graphite and optionally the one or more further fire barrier layers) may provide some or all of thermal barrier properties, structural integrity barrier properties, and endothermic properties of a panel. Where these properties are provided by the same layer, they may be provided by different materials or by the same material within that layer. The suitability of a material to perform as a structural integrity barrier material can be evaluated, e.g., by placing a sample of the said material applied on a metal skin into a muffle heated with a temperature curve comparable to a fire resistance test, verifying the absence of cracks and voids, and checking for residual mechanical properties. The structural integrity barrier material may form a coherent, strong char layer that will reduce the tendency of the underlying foam core to crack.

Endothermic materials are those that are adapted to absorb heat (especially latent heat) via an endothermic event (e.g., water evaporation). For example, the further fire barrier layer may include some form of embedded water that is liberated and evaporated under fire conditions. Exemplary materials are discussed in, e.g., International Publication No. WO 2013/098859 (i.e., PCT/IT2011/000418).

An exemplary further fire barrier layer is a layer that includes mineral wool, which may provide thermal barrier properties. For example, a layer of mineral wool of thickness 30 to 50 mm may be included in the panel. Exemplary mineral wool blankets and/or slabs are commercially available (e.g., ROCKWOOL™ from Rockwool Italia S.p.A). The layer of mineral wool may be positioned between the fire barrier layer including expandable graphite and the foam core layer.

Other exemplary further fire barrier materials are discussed in, e.g., International Publication No. WO 2013/053566 (i.e., PCT/EP2012/068069). These exemplary fire barrier materials include a ceramifying mixture of inorganic compounds in a polymer matrix, an inorganic modified adhesive polyurethane/polyurea coating, glass fibres in a polymer matrix, porous silica in a polymer matrix, and hollow glass microspheres in a polymer matrix.

Ceramifying mixture of inorganic compounds in a polymer matrix refers to a dispersion of a ceramifying mixture of inorganic compounds in a polymer matrix that may be used as a structural integrity barrier material in a further fire barrier layer. The ceramifying composition may be present in an amount of 30 wt% to 70 wt%, based on the total weight of a single fire barrier layer. The term ceramifying composition includes compositions that decompose and undergo chemical reaction under fire conditions to form a porous, self-supporting ceramic product. Exemplary mixtures include silicate minerals and inorganic phosphates. An additional inorganic filler and/or heat expandable material may be present. The ceramifying mixture may, e.g., include some or all of aluminum trihydroxide, talc, and ammonium polyphosphate. Exemplary mixtures include aluminum trihydroxide (ATH)/talc/ammonium polyphosphate (APP) and talc/APP/zinc borate/expandable graphite.

The polymer matrix, in which the ceramifying mixture of inorganic compounds is dispersed, may be a polyurethane-modified polyisocyanurate polymer. Such polymers may be formed from a polyol (e.g. a polyester polyol) and an isocyanate (e.g. an organic polyisocyanate such as a polymeric methylene diphenyl diisocyanate having approximately 2.7 functionality). A catalyst may be used. An appropriate index is 180 or more. Exemplary polyols include VORAMER™ polyols (available from The Dow Chemical Company). According to another exemplary embodiment, the polymer matrix may be a polyurethane (PU) polymer. Such polymers may be formed from a polyol (e.g. a polyether polyol) and an isocyanate (e.g., an organic polyisocyanate having approximately 2.7 functionality). A catalyst may be used. An appropriate index is 80 to 180. Exemplary polyols include VORANOL™ polyols (available from The Dow Chemical Company).

Adhesive polyurethane/polyurea refers to an adhesive polyurethane/polyurea coating formed by reaction of sodium silicate aqueous solution (common name water glass) with a hydrophilic prepolymer that can be used as a structural integrity barrier material in a further fire barrier layer. International Publication No. WO 2006/010697 (Huntsman, mentioned above) relates to such waterglass based PU/polyurea coatings. Other fire barrier materials may be dispersed in the coating. An exemplary hydrophilic polyurethane prepolymer is a Dow HYPOL™ class isocyanate. Such a coating may act as an endothermic material. Some water may remain kinetically entrapped in the polymer and/or inorganic networks of the coating, since viscosity rises rapidly during the polymer formation reaction. Thus, when the coating is heated the temperature on a non-exposed face of the polymer may remain at about 100°C for some time while water is evaporated.

Glass fibres refer to fibres that can be used as a structural integrity barrier material in a further fire barrier layer. For example, chopped glass fibres of length 5 mm to 75 mm and/or diameter 10 to 13 $\mu$m may be used. Alternatives to glass fibres include, e.g., rock fibres, basalt fibres, and carbon fibres. The fibres may be dispersed in a polymer matrix, e.g., a polymer matrix of the type discussed with respect to ceramifying mixture of inorganic compounds in polymer matrix, above.

Porous silica refers to porous silica based material that can be used as a thermal barrier material in a further fire barrier layer. The porous silica may be present in an amount from 1 wt% to 10 wt%, based on the total weight of the single fire barrier layer. An exemplary form of porous silica is nanoporous silica and particularly silica aerogel. Porous silica may be used dispersed in a polymer matrix. The polymer matrix may be pre-formed or may be formed in situ. Exemplary, pre-formed dispersions of nanoporous silica in polymer matrix are commercially available as "aerogel blankets" (e.g., Cabot Thermal Wrap™). These may include granules of silica aerogel dispersed in non-woven polymer fibres, e.g., of polyethylene and/or polyester. Dispersions of nanoporous silica in a polymer matrix may be formed in situ using commercially available silica aerogel powder. An exemplary commercially available silica aerogel nanoporous powder is Cabot Nanogel™.

According to exemplary embodiments, porous silica dispersed in a hydrophilic polymer matrix, an adhesive polyurethane/polyurea coating with structural integrity barrier properties of the type discussed above, or a polyurethane or polyurethane-modified polyisocyanurate coating of the type discussed under "Ceramifying mixture of inorganic compounds in polymer matrix" above, may be used.

Hollow glass microspheres refers to hollow glass based material that can be used as a hybrid structural integrity barrier material and thermal barrier material in a further fire barrier layer. Exemplary materials are discussed in International Publication No. WO 2010/065724. Exemplary materials are commercially available (e.g., S35 Glass Bubbles™ from 3M). The particles may be used in a polymer matrix, e.g., using one of the polymer materials discussed above. The hollow glass microspheres may have an average diameter in the range of 10 $\mu$m to 120 $\mu$m. The hollow glass microspheres may be present in an amount of 5 wt% to 50 wt%, based on the total weight of a single fire barrier layer. For example, a polymer matrix forming the fire barrier layer including hollow glass microspheres is filled with 20 wt% of S35 microspheres.

Facings

As explained above, the panel includes a metal facing. A first metal facing may be arranged near the first fire barrier layer (which includes expandable graphite) so that the first fire barrier layer is between the first metal facing and the foam layer. A second metal facing may be included in the panel on the opposite face from the first metal facing. The first and second metal facings may be the same or different. Each metal facing may be independently made of steel (e.g., lacquered, pre-painted, or galvanised steel) or aluminium. Each metal facing may independently have a thickness from 0.2 mm to 2 mm (e.g., 0.3 to 0.8 mm, 0.4 to 0.6 mm, etc.). According to an exemplary embodiment, the first metal facing may be made of a same material and have a same thickness as the second metal facing.

According to an exemplary embodiment, one facing (i.e., the external facing) is intended to be orientated towards the outside of a construction (i.e., a building or other constructed structure) in use. The other facing (i.e., internal facing) is intended to be orientated towards the inside of the construction in use. For construction considerations, it is generally expected that a fire will start on the inside of a building (i.e., on the internal facing side). Where the panels are used on an internal wall, the term internal facing may be used for the facing positioned towards the side (e.g., a room) where fire risk is higher (e.g., taking into account the risk of operations and/or thermal load). The external facing may be corrugated, for example, when the panel is a roof panel. The internal and external facings may have non-symmetrical joint profiles, for example, where concealed joints are to be formed between adjacent panels.

Foam Layer (Foam Core)

The panel includes an insulating foam layer (also referred to as a foam core). The foam core may be rigid. The foam core may have a thickness from 20 mm to 250 mm. The foam core may include polyisocyanurate foam (PIR) or polyurethane foam (PUR). For example, the foam core may be formed from a polyol (e.g., combined with a blowing agent and a catalyst) and an isocyanate (e.g., an organic polyisocyanate such as a high functional methylene diphenyl diisocyanate or other isocyanate discussed under the section titled "Fire Barrier Layer" above). The isocyanate index may be 180 or more. For example, the isocyanate index may be less than 500. The isocyanate index for forming the foam layer may be less than the isocyanate index for forming the fire barrier layer including expandable graphite, e.g., the isocyanate index for forming the fire barrier layer including expandable graphite may be 4 to 6 times greater than the isocyanate index for forming the foam layer. Exemplary materials for forming the foam layer include VORATHERM™ polyols, VORATHERM™ catalysts, and VORANATE™ isocyanates (all available from the Dow Chemical Company). An exemplary blowing agent is n-pentane.

The foam core may optionally include further components, e.g., for reinforcement and/or to improve reaction to fire properties. For example, glass fibres may be embedded in the foam core.

Panel Structure

An exemplary panel structure is shown in FIG. 1, in which a panel 10 includes a first facing A1, a fire barrier layer B, a further fire barrier layer C, a foam core D, and a second facing A2 arranged in that order. For example, the fire barrier layers B and C contact the first facing A1 and the foam core D, respectively. The first facing A1 may be the internal facing or the external facing. In another exemplary arrangement, the further fire barrier layer C may be excluded. Other exemplary panel structures are possible, e.g., one or more further fire barrier layers may be included on either side of the foam core as discussed above.

Manufacturing Process

An exemplary method of forming a panel as described herein includes providing a first metal facing with a fire barrier layer in the form of a liquid reaction mixture comprising a dispersion in an isocyanate-based reaction mixture of expandable graphite, and applying an insulating foam layer in the form of a liquid reaction mixture to the fire barrier layer. The method may further include applying a second metal facing to the insulating foam layer. For example, the sandwich panels may be manufactured by a continuous process or a discontinuous process (e.g., a continuous process or a discontinuous process known in the art). A continuous lamination process may use a double belt/band arrangement, for example, in which a liquid reaction mixture for forming a foamed polymer is deposited (poured or sprayed) onto a lower facing sheet, which may be flexible or rigid. An upper facing sheet may be contacted with the foam-forming mixture before it becomes cured and rigid. As an alternative ("inverse laminator"), the reaction mixture may be deposited onto the upper facing sheet. The discontinuous process may use molds.

The method of manufacturing the panel may include a stage of forming the fire barrier layer by reacting a polyol reactant comprising a long chain polyol of equivalent weight of more than 300 with an isocyanate-containing reactant at an index of more than 250 to form the PI matrix having the expandable graphite dispersed therein. Accordingly, the liquid fire barrier layer forming composition containing dispersed expandable graphite may be provided by mixing a polyol component, an isocyanate component, and the expandable graphite. The fire barrier layer forming composition may be a liquid isocyanate-based reaction mixture. Methods for introduction of the expandable graphite are discussed below.

The polyol component and/or the isocyanate component may also include one or more catalysts, cross-linkers, chain extenders, surfactants, flame retardants, smoke suppressants, drying agents, fillers, and other additives (e.g., additives that are known in the art). Some catalysts are solids or crystals and may optionally be dissolved in a proper solvent (e.g., the polyol, water, dipropylene glycol, or another carrier).

Various methods may be used for introducing expandable graphite into the liquid reaction mixture. For example, expandable graphite may be pre-mixed with the polyol component (e.g., in an amount of 30 wt%, such as 30 wt% to 40 wt%) or with the isocyanate component. The expandable graphite may be dispersed at high concentration into a carrier that is introduced into the reaction mixture. The expandable graphite may be introduced directly into the reaction mixture. Exemplary methods that may be implemented are as follows:

(1) A pre-mixture of expandable graphite with the polyol and/or an isocyanate component may be delivered using a low-pressure gear pump to the mixing head, where it is mixed with the parent component by means of a dynamic stirrer. (2) A dispersion of expandable graphite (expandable graphite slurry) in a carrier (e.g., of polyol or a flame retardant) may be dosed by mean of a low-pressure gear pump as an axial stream into a high-pressure mixing head. According to this embodiment, the expandable graphite slurry may enter the mixing head through a nozzle orthogonal to the two high-pressure impingement streams of polyol component and isocyanate component. An exemplary apparatus is Cannon SoliStream™. (3) Expandable graphite may be directly introduced in the mixing head, e.g., by using a Desma™ apparatus (Desma™ Tec is a mixing head which allows mixing of liquid polyol component, liquid isocyanate component, and solid expandable graphite via a granulate screw drive). (4) Expandable graphite may be added externally after the reaction mixture has exited the mixing head.

The fire barrier layer forming composition may be applied on (e.g., directly on) the first facing. For example, the fire barrier layer is formed on the upper surface of a lower facing by application of a liquid reaction mixture to the lower facing, which is of course easier than application to the underside of an upper facing. The lower facing may be the external facing mentioned above, i.e., the facing to be orientated in use towards the outside of a construction. The one or more further fire barrier layers, if present, may be applied in a similar method. Additionally or alternatively, one or more further fire barrier layers may be applied in solid form. A fire barrier layer in solid form may be secured with an adhesive composition. If an adhesive is used, the adhesive may be applied in liquid form. If a previous fire barrier layer has been applied in liquid form an adhesive composition may not be necessary.

There may be a delay between the stage of applying the fire barrier layer forming composition and the stage of applying the foam layer forming composition to allow for gelling of the fire barrier layer. For example, this delay is 10 seconds or more.

A continuous lamination process may include the following: (i) conveying a lower facing sheet, (ii) dispensing on the lower facing sheet a liquid reaction mixture for forming the fire barrier layer, (iii) allowing the fire barrier layer reaction mixture to solidify at least partially, (iv) dispensing a liquid reaction mixture for forming the core layer on top of the fire barrier layer, (v) conveying an upper facing sheet, (vi) allowing the core layer reaction mixture to expand, cure, and bond to the facing and fire barrier layer (e.g., under continuous pressure using a double conveyor). Separate panels may then be formed by cutting.

A discontinuous process using molds may include positioning the metal facings in a mold (e.g., a heated mold) and injecting the reaction mixture for forming the insulating foam layer (e.g., using a foaming machine) so as to fill the mold and adhere to the metal facings and/or any other layer. The one or more fire barrier layers may be added before the metal facings are positioned in the mold or while the metal facings are in the mold (before foam injection).

An arrangement to assist in even distribution of the liquid reaction mixtures across the width of the prospective panel may be used. For example, a discharging hose having an end travelling across a specific width (e.g., by means of a swing bar) or a pipe extending across the width of the line and provided with a number of discharging holes may be used.

Joint Fire Barrier

An arrangement of panels may include two or more adjacent panels. According to an exemplary embodiment, each panel in the arrangement includes a metal facing and an insulating foam layer. Further, a fire barrier material located in a joint region between adjacent panels, whereas the fire barrier material includes a dispersion of expandable graphite in a polyisocyanurate polymer matrix and the polymer matrix is formed by reaction at an index of more than 250 of an isocyanate-containing reactant and a polyol reactant comprising a long chain polyol of equivalent weight more than 300. The amount of expandable graphite per unit area of the fire barrier material is at least 200 g/m$^2$. Suitable joint fire barrier materials are the fire barrier materials for forming the fire barrier layer discussed above. The fire barrier material may be applied in the form of a liquid reaction mixture to the joint region, e.g., by pouring or spraying. The application of the fire barrier material may be done during the panel production, after panel production, or on site before panel installation. Two or more fire barrier materials may be included.

Referring to FIGS. 2 and 3, a panel 10 may include opposing facings A and a foam core 10. The adjacent panels 10 are mounted to each with overlapping portions, e.g., a panel having a male portion along its edge may be mounted to a panel having a complementary female portion along its edge. The panels may be mounted to one another and/or to the building structure. The panels may be joined by friction fit and/or using screws. A fire barrier material B, and optionally another layer E, may be arranged near the overlapping portions of the adjacent panels 10 so as to be arranged in the joint region of the adjacent panels 10. The arrangement of the fire barrier material B and the layer E may be varied (e.g., layer B in contact with the foam core and layer E atop the layer B, or vice versa).

Optionally, a gasket may be positioned in the joint region and it may coincide with layer E. The gasket may be formed of foam. For example, lateral joints between adjacent sandwich panels may be sealed with flexible foam gaskets, e.g., using flexible foam gaskets known in the art. The gasket may be fed from rolls during panel production. The main gasket is to provide a tight sealing to air/water when panels are installed.

Further Aspects

In a further aspect, exemplary embodiments relate to a construction (e.g., a building or a building structure such as a wall or roof) that includes one or more panels as described above, optionally with at least one first metal facing orientated towards the outside of the construction (cold side in case of fire). Where the construction does not form an outer wall/roof of a building, at least one metal facing may be orientated towards the cold side, i.e., away from the side where fire risk is higher (hot side). Referring to the exemplary embodiment in FIG. 4 (A), the intumescent layer (first fire barrier layer) is arranged closer to the hot side compared to the PIR foam layer. Referring to the exemplary embodiment in FIG. 4 (B), the intumescent layer is arranged closer to the cold side compare to the PIR foam layer.

For example, a panel may be described as including a first metal facing to be orientated towards the outside of a construction in use, a second metal facing to be orientated towards the inside of the construction in use, an insulating foam layer between the first and second metal facing, and a fire barrier layer between the first metal facing and the foam layer, whereas no fire barrier layer is present between the second metal facing and the foam layer, or whereas any fire barrier layer present between the second metal facing and the foam layer has a weight of no more than 1000 g/m$^2$ or a thickness of no more than 2 mm. The thickness of any fire barrier layer present between the second metal facing and the foam layer may be no more than 0.3 mm. According to an exemplary embodiment, no fire barrier layer is present between the second metal facing and the foam layer. For example, no layer of any type is present between the second metal facing and the foam layer, or a layer that does not provide significant thermal barrier properties, structural integrity properties, and/or endothermic properties may be present between the second metal facing and the foam layer (such an adhesive layer).

According to embodiments, the sandwich panels have very good fire resistance properties, even when the fire barrier layer is orientated away from the fire source. Thus, good fire resistance properties can be obtained when a fire barrier layer is positioned between the foam core and the external facing of a panel and when the fire barrier layer is positioned between the foam core and the internal facing of the panel. The panels may have good thermal stability, good mechanical properties, and be manufacture easily using a continuous process. The use of PI in the fire barriers may allow for good adhesion to the metal facing and to the PIR foam core. These findings with respect to fire barrier layers can also be applied to fire barrier materials used in joint protection.

By way of summation and review, the current fire resistance performance of metal faced sandwich panels, where the insulating layer is a PIR foam, is at best EI 60 on a 200 mm thick panel (where "E" refers to integrity and "I" to insulation, and is followed by the number of minutes for which the component is effective). Reference standards are EN 1363-1/2 and EN 1364-1. However, polymer foam core materials are typically combustible and leave little carbonaceous residue on burning. Thus, they provide only limited structural integrity under fire conditions. Structural integrity is important to prolong building stability and to maintain barriers to the passage of heat, smoke, and fire. Further, it has been observed that when a typical sandwich panel is treated under furnace conditions, the steel facing quickly delaminates from the foam core and cracks appear in the foam. In addition, it has been found that during a fire resistance test, temperatures rise faster at joints between panels compared to the bodies of the panels. As a result, joints are weak areas which affect the fire resistance performance of the entire panel.

Attempts have been made to improve fire resistance performance, e.g., by incorporating flame retardant additives in the foam and by using incombustible thick facing materials (e.g., gypsum). European Application No. EP 0891860 discloses a fire-resistant composite panel with a layer of intumescent mat (e.g., graphite based mineral fibre stabilized material) interposed between a core of rigid foamed plastics material and a metal outer layer. The mat is perforated with holes to permit bonding between the core and the metal layer. Publication No. WO 2006/010697 (Huntsman) discloses inorganic modified PU/polyurea coating compositions obtainable by reacting water glass (aqueous alkali metal silicate) and optionally a polyol with an isocyanate. A sandwich panel is disclosed comprising a layer of said composition between the insulation layer and the facing. Joints within the sandwich panel can also be sealed with said coating. The fire performance of the coating can be further improved by adding flame retardants, e.g., expandable graphite. US Patent Publication No. 2008/0038516 (BASF) discloses a thermal insulation composite, comprising two metal sheets with a thermally-insulating core material, whereby, between the thermally-insulating core material and at least one of the metal sheets, a fire protection intumescent layer is arranged. The fire-protection layer intumescent composition may be based on alkali metal silicate, expandable graphite, or expandable mica.

International Application No. WO 2013/053566 (i.e., PCT/EP2012/068069), relates to a panel including a metal facing, an insulating foam layer, and at least one fire barrier layer between the metal facing and the foam layer. The fire barrier layer includes at least one of porous silica, hollow glass microspheres, glass fibres, an inorganic ceramifying composition, a dispersion in a polyurethane polymer matrix or polyurethane/polyisocyanurate polymer matrix, or polyurethane/polyurea polymer matrix of expandable graphite.

All parts and percentages are by weight unless otherwise indicated. All descriptions of molecular weight are based on a number average molecular weight, unless otherwise indicated. Features described in connection with any aspect of the various embodiments discussed herein can be used in combination with any other aspect of the various embodiments.

Examples

Sample panels for Working Examples 1 to 7 and Comparative Examples A to C are prepared using lacquered steel facings and a PIR foam layer having a composition according to Table 1, below. In particular, to form a reaction mixture for forming the PIR foam layer, an isocyanate- reactive component is formed by mixing with a mechanical stirring the VORATHERM™ CN 804 polyol, the VORATHERM™ CN 626 catalyst, and n-pentane.

**Table 1**

| PIR foam | | |
|---|---|---|
| Components | Units | |
| VORATHERM™ CN 804 (polyol) | Parts bv weight | 100 |
| VORATHERM™ CN 626 (catalyst) | Parts bv weight | 3 |
| VORANATE™ M 600 (isocyanate) | Parts by weight | 171 |
| n-pentane | Parts by weight | 11 |
| Reaction Mixture Properties | | |
| Isocyanate index | | 290 |

Working Example 1

Working Example 1 includes a bottom steel facing, a fire barrier layer prepared according to the composition in Table 2, below, a PIR foam layer prepared according to the composition in Table 1, above, and a top steel facing. In particular, Working Example 1 is a 700 x 700 x 80 mm insulated metal panel sample having an overall thickness of 80 mm, which includes lacquered steel bottom and top facings (each facing having a thickness of 0.50 mm). To form the sample, the bottom steel facing is treated with the fire barrier layer composition. Specifically, the treatment of the bottom steel is carried out by forming a pre-mixture of expandable graphite with a polyol component having the composition shown in Table 2, below. The pre-mixture is hand-mixed with a Heidolph rotating mixer (3000 rpm) in a plastic bucket. Then, the pre-mixture is added to an isocyanate component having the composition shown in Table 2, below, to form a reaction mixture. After 15 seconds of stirring with the Heidolph stirrer, the reaction mixture is quickly poured onto the 700 x 700 x 80 mm lacquered steel facing, which is positioned in a press-mold electrically thermostated at 60°C.

**Table 2**

| Fire barrier layer | | |
|---|---|---|
| Expandable Graphite | Units | |
|    Expandable Graphite Quimidroga Grade 250 | Parts by weight | 50.5 |
| Polyol Component | | |
|    VORANOL™ CP 4702 (polyol) | Parts by weight | 100 |
|    DABCO™ K2097 (catalyst) | Parts by weight | 1 |
| Isocyanate Component | | |
|    VORANATE™ M 229 Isocyanate | Parts by weight | 132 |
| Reaction Mixture Properties | | |
|    Isocyanate index | | 1290 |
|    Amount of additive in reagent | wt% | 33 |
|    Amount of additive in fire barrier layer composition | wt% | 18 |

The amount of fire barrier layer poured on the steel facing allows for an expandable graphite concentration of approximately 1500 $g/m^2$. The density of the resultant fire barrier layer is approximately 800 $kg/m^3$ and the thickness of the layer is approximately 10 mm.

A high pressure Cannon™ A40 polyurethane machine is used to foam on the fire barrier layer (which is on the steel facing placed in the mold that is electrically thermostated at 60°C). The polyurethane machine is a two-components machine, in which the polyol tank includes the VORATHERM™ CN 804 polyol, the VORATHERM™ CN 626 catalyst, and n-pentane, according to the amounts in Table 1. The isocyanate tank includes VORANATE™ M 600, according to the amount in Table 1. Pouring of the foam forming reactive mixture onto the fire barrier layer is carried out for 10 seconds in the open mold. Then, the top steel facing is put on the top of the foam during the foam rise. Next, the mold is closed and allowed to cure for 30 minutes. After 30 minutes, a steel-faced sandwich panel sample according to Working Example 1 is demolded. The molded density of the core of PIR foam D is 60 $kg/m^3$.

Working Example 2

Working Example 2 includes a bottom steel facing, a fire barrier layer prepared according to the composition in Table 2, above, a mineral wool layer, a PIR foam layer prepared according to the composition in Table 1, above, and a top steel facing. Working Example 2 is prepared according to the process described with respect to Working Example 1, except that an additional 700 x 700 x 20 mm slab of mineral wool (basalt-based wool by Rockwool Italia S.p.A., density 100 $kg/m^3$) is put on top of fire barrier layer prior to forming the PIR foam layer. Thereafter, the foam PIR layer is poured on top of the mineral wool layer, but the amount of the PIR foam poured from the Cannon™ A40 machine is reduced (less space in the mold due to the presence of the mineral wool layer) in order to obtain a molded density of the foam of 60 $kg/m^3$.

Comparative Example A

Comparative Example A includes a bottom steel facing, a PIR foam layer prepared according to the composition in Table 1, above, and a top steel facing. In particular, Comparative Example A is an 700 x 700 x 80 mm insulated metal panel sample having an overall thickness of 80 mm, which includes lacquered steel bottom and top facings (each facing having a thickness of 0.50 mm). Comparative Example A is prepared according to the process described with respect to Working Example 1, except that the stage of forming the barrier layer is excluded such that the PIR foam layer is formed directly on the bottom steel facing.

Comparative Example B

Comparative Example B includes a bottom steel facing, a fire barrier layer prepared according to International Publication No. WO 2013/053566 (i.e., a polyurethane-isocyanurate forming composition operating at NCO index 200), a PIR foam layer prepared according to the composition in Table 1, above, and a top steel facing. Comparative Example B is a 700 x 700 x 80 mm insulated metal panel sample having an overall thickness of 80 mm, which includes lacquered steel bottom and top facings (each facing having a thickness of 0.50 mm). Comparative Example B is prepared according to the process described with respect to Working Example 1, except that the barrier layer composition is changed.

Working Example 3

Working Example 3 is similar to Working Example 1, except a continuous method (instead of a discontinuous method using molds) is used to obtain the samples having a thickness of 100 mm so as to have the overall dimensions of 700 x 700 x 100 mm. To form the Working Example 3, a SAIP™ continuous line equipped with a high-pressure machine for forming the PIR foam layer is used. The process, commonly referred to as Rigid Faced Double Belt Lamination, allows the PIR foam to rise and cure in the constrained space of a heated double conveyor. The PIR foam forming composition is dispensed by the high-pressure mixing head through two fixed plastic pipes ("pokers") with holes centered at a distance of 38 mm, being the two pokers positioned side by side across the width of the line (this arrangement can provide a good foam homogeneity). Further, to achieve an even distribution of the fire barrier layer on the bottom steel facing, a low-pressure mixing head is connected to a discharging hose having an end travelling across the width of the conveyor by means of a swing bar.
Importantly, the fire barrier layer forming composition is adjusted in order to have a short hardening time, allowing the step of PIR foam forming composition pouring to occur on a cured material. This adjustment may allow for a sharp and distinct separation of the two layers, which could potentially not be attained when a liquid reacting mixture is poured on the top of another liquid reacting mixture.

**Table 3**

| Working Example 3 Panel Features | | |
|---|---|---|
| | Units | |
| Panel thickness | mm | 100 |
| Type of facing | | Steel |
| Facing thickness | mm | 0.50 |
| Fire barrier laver thickness | mm | 8-10 |
| Fire barrier layer density | kg/m$^3$ | 730 |
| PIR foam core density | kg/m$^3$ | 50 |
| Tensile bond strength (bottom steel/fire barrier layer/foam) | kPa | 220 |
| Tensile bond strength (bottom steel/fire barrier layer) | kPa | 360 |
| Amount of expandable graphite per unit area | g/m$^2$ | ~1080 |

The continuous line process includes the stages of: (i) feeding the bottom steel facing, (ii) dispensing the fire barrier layer forming composition according to the formulation in Table 2 from the low-pressure machine onto the bottom steel facing, (iii) dispensing the PIR foam forming composition according to the formulation in Table 1 by means of the high-pressure (HP) mix-dispensing machine onto the fire barrier layer, (iv) feeding the top steel facing, and (v) allowing the PIR foam to rise and cure in the heated conveyor. Sample panels are then successively cut to desired length and size for medium-scale tests and for EN-1364 test. Features of the fire barrier layer (thickness, density, and amount of expandable graphite per unit area) and of the foam core (density) are as indicated in Table 3, above. Examples 3A and 3B of Table 4, below, include the fire barrier layer on the hot side and the cold side, respectively.

Working Example 4

Working Example 4 is prepared according to the process described with respect to Working Example 3, except a mineral wool layer (40 mm thickness, density 100 kg/m$^3$, and available from Rockwool Italia spa) is added. In particular, hard slabs of mineral wool are manually placed on top of the fire barrier layer not fully cured and PIR foam layer is formed on top of the mineral wool layer. Accordingly, the mineral wool layer is added after dispensing the fire barrier layer forming composition and before dispensing of the PIR foam forming composition. Examples 4A and 4B of Table 4, below, include the fire barrier layer on the hot side and the cold side, respectively.

Working Example 5

Working Example 5 is prepared according to the process described with respect to Working Example 3, except that the overall panel thickness is increased to 150 mm by increasing the thickness of the foam insulation layer.

Working Example 6

Working Example 6 is prepared according to the process described with respect to Working Example 3, except that the thickness of the fire barrier layer is reduced, while an overall panel thickness of 100 mm is maintained, such that the amount of expandable graphite per area unit is reduced to 640 g/m$^2$.

Working Example 7

Working Example 7 is prepared according to the process described with respect to Working Example 3, except the panel thickness is rescaled to 120 mm and a reinforcing glass web mattress is incorporated into the panel. The glass web mattress (producer: Schmelzer Industries Veils, 75 g/m$^2$) is unrolled after casting the fire barrier layer and before pouring of the PIR foam reaction mixture. In the final panel cut section, it is possible to identify dispersed glass fibers across most of the thickness of foam layer. Examples 7A and 7B of Table 5, below, include the fire barrier layer on the hot side and the cold side, respectively.

Comparative Example C

Comparative Example C is similar to Comparative Example A, except the continuous method discussed above with respect to Working Example 3 is used to form the sample panels. In particular, Comparative Example C includes a bottom steel facing, a PIR foam layer prepared according to the composition in Table 1, above, and a top steel facing.

Experimental Results

**Table 4**

|  | Ex. A | Ex. B | Ex. 1 | Ex. 2 | Ex. 3A | Ex. 3B | Ex. 4A | Ex. 4B | Ex. C |
|---|---|---|---|---|---|---|---|---|---|
| Location of fire barrier layer | --* | hot | hot | hot | hot | cold | hot | cold | --* |
| Overall Panel Thickness (mm) | 80 | 80 | 80 | 80 | 100 | 100 | 100 | 100 | 100 |
| Number of fire barrier lavers | 0 | 1 | 1 | 2 | 1 | 1 | 2 | 2 | 0 |
| Average sample failure time (minutes)† | 45 | 56 | 110 | 90 | 65 | 52 | 69 | 73 | 41 |
| * Fire barrier layer excluded<br>† Value given as an average of two samples | | | | | | | | | |

The results of a medium scale fire resistance test are reported in Table 4, above. The test was carried out with a 700 x 700 mmm sample panel out on the panels using a furnace capable of following the temperature/time curve of the EN 1364-1 standard (in which insulation endurance failure is defined as an increase in temperature over room temperature of 180°C as measured with a thermocouple positioned on the surface of panel external to the furnace). Hot side refers to the position of the fire barrier layer adjacent to the face of the panel closer to the heat source, see FIG. 4 (A). Cold side refers to the position of the fire barrier layer adjacent to the side of the panel far from the heat source, see FIG. 4 (B). Working Examples 1, 2, 3A, and 4A are tested with the fire barrier layer placed on the hot side and Working Examples 3B and 4B are tested with the fire barrier layer on the cold side. Two separate samples for each of Working Examples 1 to 4 and Comparative Example A to C are tested, and the result sample failure time is recorded as an average in Table 4.

Referring to Table 4, a fire barrier layer of expandable graphite in a high index PI polymer matrix improves fire resistance performance (measured as average failure time) when positioned on the hot side or the cold side in comparison to when no fire barrier layer is present. Further, when the high index PI matrix is used for the fire barrier layer on the hot side (see Working Examples 1, 2, 3A, and 4A), the results are improved with respect to when a lower index polyurethane-isocyanurate is used on the hot side (see Comparative Example B). Improvements have also been observed where the high index PI fire barrier layer is combined with an additional mineral wool layer (see Working Examples 2, 4A, and 4B).

Referring to Table 5, below, EN 1364 testing (large scale) is performed on samples of Working Examples 4 to 7 and Comparative Example C. For each type of panel, a wall assembly of three panels is evaluated in the test; the panels, according to EN 1364 standard, are assembled into a 3x3 meters frame. Thermocouples used in test EN 1364 are divided into sections and five core-thermocouples located far from panel edges / joints account for the insulation behavior of the bodies of the panels. According to EN 1364, there are two insulation failure criteria for the five core-thermocouples and the criteria are the following: (i) single thermocouple reading higher than 180°C plus the average of temperature at the beginning of the test ("room temperature"), and (ii) average of thermocouple temperature higher than 140°C plus room temperature. Integrity of the assembly, with the use of the joint/edge protection, can be ensured for an amount of time same as or greater than timing of failure for the cited two insulation criteria.

**Table 5**

|  | Ex. 4A | Ex. 5 | Ex. 6 | Ex. 7A | Ex. 7B | Ex. C |
|---|---|---|---|---|---|---|
| Location of fire barrier layer | hot | cold | cold | hot | cold | - |
| Overall Thickness (mm) | 100 | 150 | 100 | 120 | 120 | 100 |
| Number of fire barrier layers | 2 | 1 | 1 | 1 | 1 | 0 |
| Amount of expandable graphite per unit area (g/m$^2$) | 1080 | 1080 | 640 | 1080 | 1080 | 0 |
| Single insulation point failure* (180°C + room temperature) (min) | 60 | >90 | 70 | >67† | >76 | 40 |
| Average temperature insulation failure* (140°C + room temperature) (min) | 64 | 81 | 69 | >67† | 76 | 39 |
| * There was no integrity failure within the testing time of the insulation failure. † Integrity failure occurs at 67 minutes, which is before insulation failure occurs | | | | | | |

The frame assembly includes a protection of joints consisting of steel flashings screwed to surfaces of panels, as well as protection of the assembly edges between the panels and the concrete frame of the test rig. These methods are of common use and aimed to enhance long-lasting integrity of the panel assembly during the test, some guidelines regarding these assemblies can be found in eGolf Recommendation Bulletins (European Group of Organizations for Fire Testing, Inspection and Certification).

Referring to FIG. 5, thermogravimetric analysis is carried out on the PI polymer matrix used for the fire barrier layer of Working Example 1 (having an isocyanate index of 1290) and a comparative fire barrier layer polymer matrix having an isocyanate index 200 (as in Example 2-6 of International Publication No. WO 2013/053566 or Comparative Example B of the present disclosure). A temperature ramp of 30 to 800 °C at 10 °C per minute is used. A nitrogen flux is used. As shown in FIG. 5, across most temperatures ranges the high index PI polymer has a lower weight loss so that the polymer is more thermally stable.

Referring to Table 6, physical properties of five specimens of fire barrier layers prepared according to the process described for Working Example 3 are tested.

**Table 6**

| Specimen Number | Modulus | Yield deformation | Yield Stress | Deformation at break | Stress at break | Max Stress | Comments |
|---|---|---|---|---|---|---|---|
| | (MPa) | (%) | (kPa) | (%) | (kPa) | (kPa) | Integrity maintained during the test?(Y/N) |
| 1 | 90.7 | 22.2 | 11700 | 70.4 | 53000 | 53200 | Y |
| 2 | 96.3 | 24.1 | 11900 | 72.0 | 52200 | 52400 | Y |
| 3 | 93.5 | 21.3 | 11700 | 70.4 | 52100 | 52200 | Y |
| 4 | 65.1 | 23.9 | 9760 | 77.5 | 53100 | 53100 | Y |
| 5 | 68.6 | 26.8 | 11500 | 74.8 | 53200 | 53200 | Y |
| **Average** | **82.8** | **23.7** | **11300** | **73.0** | **52700** | **52900** | |

The glass transition temperature of the fire barrier layer is tested using differential scanning calorimetry (25-250 °C, 10 °C/min, nitrogen, aluminum pan). The onset of the transition is at 102 °C. The compressive behavior of the fire barrier layer is measured on specimens of dimension 50 x 10 x 4 mm according to Standard UNI EN ISO 604. The compressive load is applied in the direction of the main dimension (cross-section 10 x 4 mm). The low brittleness is reflected in the relatively high deformation at break.

## Claims

1.  A panel, comprising:

    a first metal facing;
    an insulating foam layer; and
    a fire barrier layer between the first metal facing and the foam layer, the fire barrier layer comprising a dispersion of expandable graphite in a polyisocyanurate polymer matrix, wherein:

    the polymer matrix is formed by reaction at an isocyanate index of more than 250 of an isocyanate-containing reactant and a polyol reactant including a long chain polyol of equivalent weight of more than 300, and the amount of expandable graphite per unit area is at least 200 $g/m^2$.

2.  The panel as claimed in claim 1, further comprising a second metal facing on the opposite side of the foam layer from the first metal facing and optionally further comprising a further fire barrier layer between the second metal facing and the foam layer.

3.  The panel as claimed in claim 1 or claim 2, wherein the fire barrier layer is continuous and is continuously bonded to the first metal facing and to the insulating foam layer.

4.  The panel as claimed in any one of claims 1 to 3, wherein the polymer matrix of the fire barrier layer is formed by reaction at an index of more than 700.

5.  The panel as claimed in any one of claims 1 to 4, wherein the long chain polyol is a polyether polyol or a polyester polyol.

6.  The panel as claimed in any one of claims 1 to 5, wherein the amount of expandable graphite per unit area is at least 500 $g/m^2$.

7.  The panel as claimed in any one of claims 1 to 6, further comprising another fire barrier layer between the first metal facing and the foam layer.

8.  The panel as claimed in Claim 7, wherein the other fire barrier layer includes mineral wool.

9. The panel as claimed in any one of claims 1 and 3 to 8, further comprising: a second metal facing adapted to be oriented towards the inside of a construction in use, wherein:

> the first metal facing is adapted to be oriented towards the outside of a construction in use,
> the foam layer is between the first and second metal facings, and
> no fire barrier layer is present between the second metal facing and the foam layer or any fire barrier layer present between the second metal facing and the foam layer has a weight of no more than 1000 $g/m^2$ or a thickness of no more than 0.3 mm.

10. A construction comprising one or more panels as claimed in any one of claims 1 to 8, and optionally a first metal facing of each of the one or more panels is oriented toward an outside of the construction.

11. A method of forming a panel as claimed in any one of claims 1 to 8, comprising the stages of:

> providing on a first metal facing, a fire barrier layer in the form of a first liquid reaction mixture including a dispersion of expandable graphite in an isocyanate-based reaction mixture; and
> applying on the fire barrier layer, an insulating foam layer in the form of a second liquid reaction mixture.

12. The method as claimed in claim 11, further comprising applying a second metal facing on the insulating foam layer.

13. The method as claimed in claim 11 or claim 12, wherein the first metal facing is a lower facing and the first liquid reaction mixture is applied to an upper surface of the lower facing.

14. The method as claimed in any one of claims 11 to 13, wherein the method is a continuous process.

15. A panel arrangement, comprising:

> two or more adjacent panels, optionally as claimed in any one of claims 1 to 8, each panel comprising a metal facing and an insulating foam layer, and
> a fire barrier material located in a joint region between adjacent panels,
> wherein the fire barrier material includes a dispersion of expandable graphite in a polyisocyanurate polymer matrix, wherein:
>
> > the polymer matrix is formed by reaction at an index of more than 250 of an isocyanate-containing reactant and a polyol reactant comprising a long chain polyol of equivalent weight more than 300, and
> > the amount of expandable graphite per unit area is at least 200 $g/m^2$.

**Patentansprüche**

1. Eine Platte, beinhaltend:

> eine erste Metallaußenschicht;
> eine isolierende Schaumstoffschicht; und
> eine Flammbarriereschicht zwischen der ersten Metallaußenschicht und der Schaumstoffschicht, wobei die Flammbarriereschicht eine Dispersion expandierbaren Graphits in einer Polyisocyanuratpolymermatrix beinhaltet, wobei:
>
> > die Polymermatrix durch die Reaktion eines isocyanathaltigen Reaktanten und eines Polyolreaktanten, der ein langkettiges Polyol mit einem Äquivalentgewicht von mehr als 300 umfasst, bei einem Isocyanatindex von mehr als 250 gebildet wird, und
> > die Menge des expandierbaren Graphits pro Flächeneinheit mindestens 200 $g/m^2$ beträgt.

2. Platte gemäß Anspruch 1, die ferner eine zweite Metallaußenschicht auf der der ersten Metallaußenschicht entgegengesetzten Seite der Schaumstoffschicht beinhaltet und optional ferner eine weitere Flammbarriereschicht zwischen der zweiten Metallaußenschicht und der Schaumstoffschicht beinhaltet.

3. Platte gemäß Anspruch 1 oder Anspruch 2, wobei die Flammbarriereschicht kontinuierlich ist und kontinuierlich an die erste Metallaußenschicht und an die isolierende Schaumstoffschicht gebunden ist.

4. Platte gemäß einem der Ansprüche 1 bis 3, wobei die Polymermatrix der Flammbarriereschicht durch die Reaktion bei einem Index von mehr als 700 gebildet wird.

5. Platte gemäß einem der Ansprüche 1 bis 4, wobei das langkettige Polyol ein Polyetherpolyol oder ein Polyesterpolyol ist.

6. Platte gemäß einem der Ansprüche 1 bis 5, wobei die Menge des expandierbaren Graphits pro Flächeneinheit mindestens 500 g/m$^2$ beträgt.

7. Platte gemäß einem der Ansprüche 1 bis 6, die ferner eine andere Flammbarriereschicht zwischen der ersten Metallaußenschicht und der Schaumstoffschicht beinhaltet.

8. Platte gemäß Anspruch 7, wobei die andere Flammbarriereschicht Mineralwolle umfasst.

9. Platte gemäß einem der Ansprüche 1 und 3 bis 8, die ferner Folgendes beinhaltet: eine zweite Metallaußenschicht, die angepasst ist, um bei Gebrauch zu der Innenseite einer Konstruktion hin ausgerichtet zu sein, wobei:

die erste Metallaußenschicht angepasst ist, um bei Gebrauch zu der Außenseite einer Konstruktion hin ausgerichtet zu sein,
die Schaumstoffschicht zwischen der ersten und der zweiten Metallaußenschicht liegt und
zwischen der zweiten Metallaußenschicht und der Schaumstoffschicht keine Flammbarriereschicht vorhanden ist oder eine etwaige zwischen der zweiten Metallaußenschicht und der Schaumstoffschicht vorhandene Flammbarriereschicht ein Gewicht von nicht mehr als 1000 g/m$^2$ oder eine Dicke von nicht mehr als 0,3 mm aufweist.

10. Eine Konstruktion, die eine oder mehrere Platten gemäß einem der Ansprüche 1 bis 8 beinhaltet, und optional eine erste Metallaußenschicht jeder der einen oder mehreren Platten zu einer Außenseite der Konstruktion hin ausgerichtet ist.

11. Ein Verfahren zum Bilden einer Platte gemäß einem der Ansprüche 1 bis 8, welches die folgenden Phasen beinhaltet:

Bereitstellen, auf einer ersten Metallaußenschicht, einer Flammbarriereschicht in der Form einer ersten flüssigen Reaktionsmischung, die eine Dispersion von expandierbarem Graphit in einer isocyanatbasierten Reaktionsmischung umfasst; und
Auftragen, auf die Flammbarriereschicht, einer isolierenden Schaumstoffschicht in der Form einer zweiten flüssigen Reaktionsmischung.

12. Verfahren gemäß Anspruch 11, das ferner das Auftragen einer zweiten Metallaußenschicht auf die isolierende Schaumstoffschicht beinhaltet.

13. Verfahren gemäß Anspruch 11 oder Anspruch 12, wobei die erste Metallaußenschicht eine untere Außenschicht ist und die erste flüssige Reaktionsmischung auf eine obere Oberfläche der unteren Außenschicht aufgetragen wird.

14. Verfahren gemäß einem der Ansprüche 11 bis 13, wobei das Verfahren ein kontinuierlicher Prozess ist.

15. Eine Plattenanordnung, beinhaltend:

zwei oder mehr benachbarte Platten, optional gemäß einem der Ansprüche 1 bis 8, wobei jede Platte eine Metallaußenschicht und eine isolierende Schaumstoffschicht beinhaltet, und
ein Flammbarrierematerial, das sich in einem Fugenbereich zwischen benachbarten Platten befindet,
wobei das Flammbarrierematerial eine Dispersion von expandierbarem Graphit in einer Polyisocyanuratpolymermatrix umfasst, wobei:

die Polymermatrix durch die Reaktion eines isocyanathaltigen Reaktanten und eines Polyolreaktanten, der ein langkettiges Polyol mit einem Äquivalentgewicht von mehr als 300 beinhaltet, bei einem Index von mehr als 250 gebildet wird, und
die Menge des expandierbaren Graphits pro Flächeneinheit mindestens 200 g/m$^2$ beträgt.

**Revendications**

1. Un panneau, comprenant :

un premier parement métallique ;
une couche de mousse isolante ; et
une couche ignifuge entre le premier parement métallique et la couche de mousse, la couche ignifuge comprenant une dispersion de graphite expansible dans une matrice de polymère de polyisocyanurate, dans lequel :

la matrice polymère est formée par la réaction, à un indice d'isocyanate de plus de 250, d'un réactif contenant un isocyanate et d'un réactif (à base de) polyol comportant un polyol à longue chaîne d'un poids équivalent de plus de 300, et
la quantité de graphite expansible par unité de surface est d'au moins 200 g/m$^2$.

2. Le panneau tel que revendiqué dans la revendication 1, comprenant en outre un deuxième parement métallique sur le côté opposé de la couche de mousse à partir du premier parement métallique et comprenant en outre éventuellement une couche ignifuge supplémentaire entre le deuxième parement métallique et la couche de mousse.

3. Le panneau tel que revendiqué dans la revendication 1 ou la revendication 2, dans lequel la couche ignifuge est continue et est liée en continu au premier parement métallique et à la couche de mousse isolante.

4. Le panneau tel que revendiqué dans n'importe laquelle des revendications 1 à 3, dans lequel la matrice de polymère de la couche ignifuge est formée par réaction à un indice de plus de 700.

5. Le panneau tel que revendiqué dans n'importe laquelle des revendications 1 à 4, dans lequel le polyol à longue chaîne est un polyol de polyéther ou un polyol de polyester.

6. Le panneau tel que revendiqué dans n'importe laquelle des revendications 1 à 5, dans lequel la quantité de graphite expansible par unité de surface est d'au moins 500 g/m$^2$.

7. Le panneau tel que revendiqué dans n'importe laquelle des revendications 1 à 6, comprenant en outre une autre couche ignifuge entre le premier parement métallique et la couche de mousse.

8. Le panneau tel que revendiqué dans la revendication 7, dans lequel l'autre barrière ignifuge comporte de la laine minérale.

9. Le panneau tel que revendiqué dans n'importe laquelle des revendications 1 et 3 à 8, comprenant en outre :

un deuxième parement métallique conçu pour être orienté vers l'intérieur d'une construction lors de l'utilisation, dans lequel :

le premier parement métallique est conçu pour être orienté vers l'extérieur d'une construction lors de l'utilisation,
la couche de mousse se situe entre le premier et le deuxième parements métalliques, et
aucune couche ignifuge n'est présente entre le deuxième parement métallique et la couche de mousse ou toute couche ignifuge présente entre le deuxième parement métallique et la couche de mousse a un poids inférieur ou égal à 1 000 g/m$^2$ ou une épaisseur inférieure ou égale à 0,3 mm.

10. Une construction comprenant un ou plusieurs panneaux tels que revendiqués dans n'importe laquelle des revendications 1 à 8, et éventuellement un premier parement métallique de chacun du ou des panneaux est orienté vers un extérieur de la construction.

11. Une méthode de formation d'un panneau tel que revendiqué dans n'importe laquelle des revendications 1 à 8, comprenant les étapes consistant à :

fournir sur un premier parement métallique, une couche ignifuge sous la forme d'un premier mélange de réaction liquide comportant une dispersion de graphite expansible dans un mélange de réaction à base d'isocyanate ; et
appliquer sur la couche ignifuge, une couche de mousse isolante sous la forme d'un deuxième mélange de réaction liquide.

**12.** La méthode telle que revendiquée dans la revendication 11, comprenant en outre l'application d'un deuxième parement métallique sur la couche de mousse isolante.

**13.** La méthode telle que revendiquée dans la revendication 11 ou la revendication 12, dans laquelle le premier parement métallique est un parement inférieur et le premier mélange de réaction liquide est appliqué sur une surface supérieure du parement inférieur.

**14.** La méthode telle que revendiquée dans n'importe laquelle des revendications 11 à 13, dans laquelle la méthode est un procédé continu.

**15.** Un agencement de panneaux, comprenant :

deux panneaux adjacents ou plus, éventuellement tels que revendiqués dans n'importe laquelle des revendications 1 à 8, chaque panneau comprenant un parement métallique et une couche de mousse isolante, et un matériau ignifuge situé dans une région commune entre des panneaux adjacents, dans lequel le matériau ignifuge comporte une dispersion de graphite expansible dans une matrice de polymère de polyisocyanurate, dans lequel :

la matrice polymère est formée par la réaction, à un indice d'isocyanate de plus de 250, d'un réactif contenant un isocyanate et d'un réactif à base de polyol comprenant un polyol à longue chaîne d'un poids équivalent supérieur à 300, et
la quantité de graphite expansible par unité de surface est d'au moins 200 g/m$^2$.

FIG. 1

FIG. 2

FIG. 3

A                                                    B

FIG. 4

FIG. 5

**EP 2 969 534 B1**

## REFERENCES CITED IN THE DESCRIPTION

**Patent documents cited in the description**

- US 2012189838 A1
- WO 2013098859 A
- IT 2011000418 W
- WO 2013053566 A
- EP 2012068069 W
- WO 2006010697 A
- WO 2010065724 A
- EP 0891860 A
- US 20080038516 A